(19) Europäisches Patentamt

European Patent Office

Office européen des brevets

(11) Veröffentlichungsnummer: **0 176 784 B1**

(12) **EUROPÄISCHE PATENTSCHRIFT**

(45) Veröffentlichungstag der Patentschrift: **02.01.92**

(51) Int. Cl.⁵: **A01G 3/03**

(21) Anmeldenummer: **85111032.0**

(22) Anmeldetag: **02.09.85**

(54) **Astschere.**

(30) Priorität: **07.09.84 DE 8426495 U**

(43) Veröffentlichungstag der Anmeldung:
**09.04.86 Patentblatt 86/15**

(45) Bekanntmachung des Hinweises auf die
Patenterteilung:
**02.01.92 Patentblatt 92/01**

(84) Benannte Vertragsstaaten:
**AT BE CH DE FR GB IT LI NL SE**

(56) Entgegenhaltungen:
**CH-A- 582 464**
**FR-A- 841 555**
**GB-A- 2 100 648**
**US-A- 2 146 952**
**US-A- 4 224 739**

(73) Patentinhaber: **Wolf-Geräte GmbH**
**Gregor-Wolf-Strasse 16 Postfach 860 und
880**
**W-5240 Betzdorf/Sieg(DE)**

(72) Erfinder: **Held, Peter**
**Fichteweg 3**
**W-5240 Betzdorf/Sieg(DE)**

(74) Vertreter: **Koch, Günther, Dipl.-Ing. Patentanwälte Wallach, Koch, Dr. Haibach, Feldkamp
et al**
**P.O. Box 121120**
**W-8000 München 12(DE)**

Rank Xerox (UK) Business Services

EP 0 176 784 B1

## Beschreibung

Die Erfindung bezieht sich auf eine Astschere der im Oberbegriff des Patentanspruchs 1 angegebenen Gattung. Eine solche Astschere ist aus der FR-A-841 555 bekannt. Diese Astschere benutzt eine herkömmliche Gartenschere mit zwei aneinander ablaufenden Schneiklingen, die um einen gemeinsamen Gelenkpunkt drehbar sind, wobei einer der Zangenhebel mit einer Stieltülle versehen und auf einen Stiel aufsetzbar ist. Der zwischen den Krafthebelarmen der Zangenhebel angeordnete Flaschenzug besteht aus zwei losen Rollen und zwei festen Rollen, die jeweils mit Abstand längs der Scherenhebel an diesen gelagert sind. Die Lasthebelarme der Zangenschenkel müssen daher in bestimmter Weise angepaßt sein, um die Rollen zu lagern und den Stiel aufnehmen zu können. Da die Rollenlager längs der Hebelarme versetzt sind, greifen nur zwei der Rollen am Hebelarmende an, während die anderen Rollen und das Ende des Zugseils an einem wesentlich kürzeren Hebelarm angreifen. Bedingt hierdurch und die einfache Bauart der Schere ist die Schneidkraft begrenzt und die Benutzung der Schere damit auf dünnere Äste beschränkt.

Durch die DE-A-31 36 119 ist eine Gartenschere bekanntgeworden, die mit ziehendem Schnitt arbeitet und eine Hebelkraftübersetzung in ihren Zangenschenkeln aufweist, die den Kraftaufwand beim Schneiden verringert und auch das Schneiden dickerer Äste zuläßt, was noch dadurch unterstützt wurde, daß an den Krafthebelarmen der Zangenschenkel verhältnismäßig lange Griffstangen angeordnet wurden. Die Länge dieser Griffstangen ermöglichte zwar auch das Schneiden von Ästen, die mit einer einfachen Handschere nicht erreichbar waren, jedoch erforderte der Schnitt entfernt liegender Äste eine unbequeme Handhabung mit gestreckte Armen.

Der Erfindung liegt die Aufgabe zugrunde, eine gattungsgemäße Astschere so auszubilden, daß bei bequemer Handhabung und unter geringem Kraftaufwand auch dickere Äste bequem und ergonometrisch günstig geschnitten werden können, wobei von der zusätzlichen Hebelkraftverstärkung Gebrauch gemacht wird, die der zuletzt erwähnten Gartenschere eigen ist.

Gelöst wird die gestellte Aufgabe durch die Kombination der im Kennzeichnungsteil des Patentanspruchs angegebenen Merkmale a) bis f).

Durch das Merkml a) wird erreicht, daß die Quetschkraft in eine Bewegung der Schneidklinge in Längsrichtung umgeformt wird, wodurch ein An- und Durchschneiden der Äste erleichtert wird. Dieses Merkmal ist bei Handgartenscheren bekannt, wie dies beispielsweise aus der DE-A-3 136 119 und FR-A-922 645 hervorgeht.

Durch das Merkmal b) wird erreicht, daß innerhalb des Scherensystems eine Kraftverstärkung gewährleistet wird. Eine solche Kraftverstärkung durch einen zusätzlichen Hebel ist aus der DE-A-3 136 119 bekannt, jedoch nicht bei einer Stielschere mit Flaschenzug.

Durch das Merkmal c) wird erreicht, daß der Doppelhebelaufbau raumsparend im Scherenquerschnitt untergebracht wird, so daß die Schere durch enge Zwischenräume geführt werden kann. Bekannt ist dieser Aufbau aus der DE-A-3 136 119.

Durch das nicht vorbekannte Merkmal d) wird erreicht, daß die Öffnungsfeder sich eng an den Umriß der Schere anschmiegt und somit die Führung der Schere nicht behindert, aber trotzdem eine hohe Öffnungskraft gewährleistet, die auch die Reibung der Umlenkrollen des Flaschenzuges überwindet.

Durch das Merkmal e) wird erreicht, daß die Schere leicht vom Stiel abgenommen und als Handschere benutzt werden kann. Bei allen anderen bekannten, mit Stiel versehenen Astscheren, wie beispielsweise bei der gattungsbildenden Schere nach der FR-A-841 555, kann zwar auch der Stiel aus der Stieltülle entnommen werden, jedoch nur mit erheblichem Zeit- und Kraftaufwand und auf die Gefahr hin, daß die Schere dann beim Wiederaufsetzen nicht mehr fest am Stiel sitzt. Die für diesen Zweck vorgesehene Stielbefestigungskupplung ist aus der DE-B-3 130 703 bekannt.

Durch das Merkmal f) wird erreicht, daß der Flaschenzug an den äußersten Enden der Krafthebelarme angreift, womit die höchstmögliche Kraftverstärkung zustande kommt. Es ist zwar aus der US-A-2 146 952 bekannt, die festen Rollen eines Flaschenzuges einerseits und die losen Rollen eines Flaschenzuges andererseits auf einer Achse nebeneinander anzuordnen, jedoch bei einem Astschneidgerät einer anderen Gattung.

Die in den Merkmalen e) und f) beschriebenen Hülsen ermöglichen es, die Gartenschere gemäß DE-A-3 136 119 ohne Veränderung ihres Gesamtaufbaus zu einer Stielschere weiterzuentwickeln, die ein bequemes Schneiden mit geringem Kraftaufwand über relativ große Entfernungen ermöglicht. Die Hülsen werden zu diesem Zweck auf die Krafthebelarme der Zangenschenkel aufgezogen, auf denen sonst die Griffstangen aufgesteckt wurden. Die für den Flaschenzug und die Stielbefestigungskupplung erforderlichen Bauelemente sind ausschließlich an den Hülsen ausgebildet, so daß ein Zusammenbau mit bestehenden Scheren möglich ist, die entsprechende Krafthebelarme aufweisen.

Weitere zweckmäßige Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:

Fig. 1     eine Ansicht einer erfindungsgemäß ausgebildeten Astschere in Öffnungsstellung;

Fig. 2     eine Ansicht der in Fig. 1 dargestellten Schere in Schließstellung.

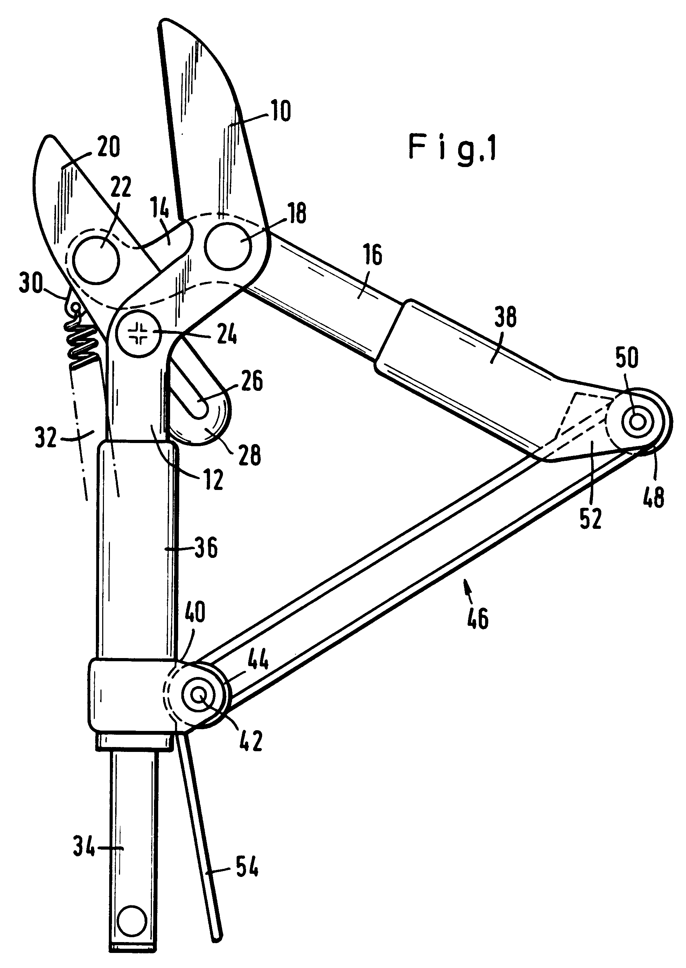

Die Astschere weist zwei über einen Drehzapfen 18 verbundene Scherenhebel auf. Der erste Scherenhebel weist einen Lasthebelarm in Gestalt eines Schneidblattes 10 und einen Krafthebelarm 12 auf. Der Hebel besteht aus einem gekröpften Flacheisen. Der zweite Scherenhebel, der ebenfalls aus einem gekröpften Flacheisen besteht, weist einen Lasthebelarm 14 und einen Krafthebelarm 16 auf. Der Lasthebelarm 14 ist an einem mit dem Schneidblatt 10 zusammenwirkenden Amboß 20 über einen Drehzapfen 22 angelenkt. Ein im Krafthebelarm 12 festgelegter Schiebegelenkzapfen 24 steht in einen Langlochschlitz 26 eines Fortsatzes 28 des Amboß 20 ein. Ein Halteblech 30 ist mittels des Drehzapfens 22 am Ende des Lasthebelarms 14 nach außen vorstehend angeordnet. In einem Loch dieses Halteblechs ist das Ende einer Zugschraubenfeder 32 verankert, deren anderes Ende an einem in der Zeichnung nicht dargestellten Stift angreift, der von der Rückseite des Krafthebelarmes 12 bzw. der hierauf aufgezogenen Hülse 36 vorsteht. Durch diese Feder 32 wird die Schere in die aus Figur 1 ersichtliche Öffnungsstellung vorgespannt. Anstelle des Halteblechs 30 könnte die Feder auch an einer Verlängerung des Lasthebelarms 14 angreifen. Die Anordnung des Halteblechs 30 hat jedoch den Vorteil, daß keine Änderung der Scherenhebel gegenüber einer Handscherenausbildung erforderlich ist.

Der Krafthebelarm 12 bzw. die hierauf aufgezogene, beispielsweise aus Kunststoff bestehende Hülse 36 setzt sich fort in einem Geräteeinsteckzapfen 34, der das eine Teil einer Stielbefestigungskupplung bildet, deren anderer Kupplungsteil am Ende eines nicht dargestellten Stieles vorgesehen ist. Die Stielbefestigungskupplung ist zweckmäßigerweise gemäß der DE-C-31 30 703 ausgebildet, kann jedoch auch andere Form aufweisen.

Von der Hülse 36 stehen seitlich zwei Gabelarme 40 vor, die zwischen sich einen Achsbolzen 42 tragen, auf dem hintereinander zwei "feste" Rollen 44 eines Flaschenzuges 46 frei drehbar gelagert sind.

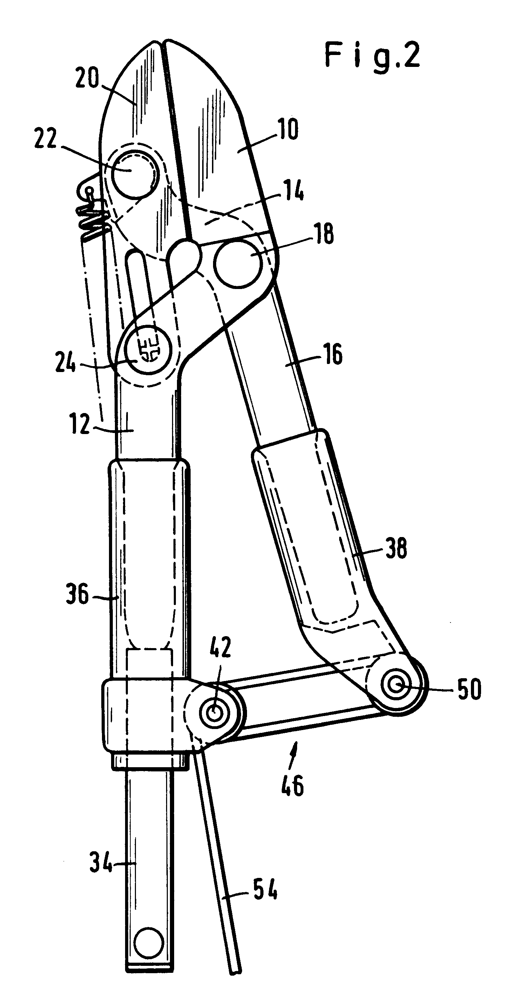

Eine auf den Krafthebelarm 16 aufgezogene Hülse 38 setzt sich in zwei Gabelarmen 52 fort, zwischen denen ein Achsbolzen 50 fixiert ist, auf dem hintereinander zwei "lose" Rollen 48 des Flaschenzuges 46 drehbar gelagert sind. Ein Ende eines Zugseiles 54 ist am freien Ende der Hülse 36 bzw. des Krafthebelarms 12 fixiert und um eine der Rollen 48, beispielsweise die gemäß Fig. 1 und 2 hintere Rolle geführt und verläuft dann nach der hinteren festen Rolle 44, und von dort zurück nach der vorderen Rolle losen 48 und dann über die vordere feste Rolle 44 des Flaschenzuges 46. Am freien Ende des Zugseils 54 ist ein nicht dargestellter Handgriff befestigt, an dem die Bedienungsperson angreifen kann.

Die Hülsen 36 und 38 können als Handgriff benutzt werden, wenn die Astschere als Handschere Verwendung finden soll.

Es ist von besonderem Vorteil, daß ein Zug in Richtung eines Scheren-Krafthebelsarmes 12 ausgeübt werden kann, anstelle der bei Handastscheren erforderlichen Einwärtsbewegung der Hände, was ergonometrisch ungünstig ist.

Mittels der Stielbefestigungskupplung können beliebig lange Stiele an dem Geräteeinsteckzapfen 34 festgelegt werden, so daß auch eine bequeme Arbeitsweise bei weiter entfernt liegenden Ästen gewährleistet ist.

**Patentansprüche**

1. Astschere mit zwei gelenkig über einen Drehzapfen (18) miteinander verbundenen, durch eine Öffnungsfeder (32) in Öffnungsstellung vorgespannten Scherenhebeln, von denen der eine mit seinem festen Krafthebelarm (12) an einem Stiel festlegbar ist und die Krafthebelarme (12, 16) beider Scherenhebel über einen Flaschenzug (46) miteinander in Verbindung stehen, dessen zwei feste Rollen (44) an dem mit dem Stiel verbundenen festen Krafthebelarm (12) und dessen zwei lose Rollen (48) am beweglichen Kraftarm (16) gelagert sind, wobei das Zugseil (54) des Flaschenzuges (46) am festen Krafthebelarm (12) angreift und am Stiel entlangführbar ist, und wobei der Lastarm des am Stiel festlegbaren Scherenhebels als Schneidblatt (10) ausgebildet ist, gekennzeichnet durch die Vereinigung folgender Merkmale:

a) der Lasthebelarm (14) des beweglichen Scherenhebels trägt einen Amboß (20), auf dem das Schneidblatt (10) im ziehenden Schnitt abläuft,

b) der Lasthebelarm (14) des beweglichen Scherenhebels ist über einen Drehzapfen (22) an dem Amboß (20) angelenkt, der einen Kraftverstärkungshebel (20, 28) bildet,

c) der Krafthebelarm (28) des Kraftverstärkungshebels ist mit einem Langlochschlitz (26) entlang einem Schiebe gelenkzapfen (24) geführt, der in den mit dem Stiel verbundenen Krafthebelarm (12) eingesetzt ist,

d) die Öffnungsfeder (32) ist einerseits an einem mittels des Drehzapfens (22) am Amboß (20) festgelegten Halteblech (30) und andererseits an dem mit dem Stiel verbindbaren festen Krafthebelarm (12) verankert,

e) eine auf den festen Krafthebelarm (12) aufgezogene Hülse (36) trägt den Geräteeinsteckzapfen (34) einer Stielbefestigungskupplung, sowie zwei seitlich vorstehende Gabelarme (40), die zwischen sich einen Achsbolzen (42) für die festen Rollen (44) des Flaschenzuges koaxial hintereinander tragen,

f) eine auf dem beweglichen Krafthebelarm (16) aufgezogene Hülse (38) setzt sich in zwei Gabelarmen (52) fort, zwischen denen ein Achsbolzen (50) fixiert ist, der die losen Rollen (48) des Flaschenzuges koaxial hintereinander trägt.

## Claims

1. Branch-cutter with two cutting levers, hinged together via a rotating pin (18), tensioned in the open position by means of an opening spring (32), of which one can be attached by its fixed force arm (12) to a shaft and the force arms (12, 16) of both cutter levers are connected together via a pulley block (46), the two fixed pulleys (4) of which are bearing-mounted on the force arm (12) which is fixed to the shaft and the two free-moving pulleys (48) on the moveable force arm (16), whereby the cable (54) of the pulley block (46) acts on the fixed force arm (12) and can be fed along the shaft, and whereby the load arm of the cutter lever which may be attached to the shaft is designed as a cutting blade (10),

characterized by the association of the following characteristics:

a) The load arm (14) of the moveable cutter lever holds an anvil (20), on which the cutting blade (10) runs in a pulling cut,

b) The load arm (14) of the moveable cutter lever is hinged to the anvil (20) via a rotating pin (22), thus forming a force amplification lever (20, 28),

c) The force arm (28) of the force amplification lever is fitted with a slot (26) along one sliding hinge pin (24), which is inserted in the force arm (12) attached to the shaft,

d) The opening spring (32) is on the one hand anchored to a fixing plate (30) fixed to the anvil (20) by means of a rotating pin (22) and on the other hand to the fixed force arm (12) which may be attached to the shaft,

e) A sheath (36) fitted over the force arm (12) holds the fixture pin (34) of a shaft fixing coupling, together with laterally projecting fork arms (40), which hold co-axially between them an axial bolt (42) for the fixed pulleys (44) of the pulley block, one behind the other,

f) A sheath (38) fitted over the moveable force arm (16) extends into two fork arms (52), between which an axial bolt (50) is fixed, which holds co-axially the free-moving pulleys (48) of the pulley block.

## Revendications

1. Sécateur pour arbres, présentant deux leviers croisés qui sont reliés l'un à l'autre de manière articulée par l'intermédiaire d'un tourillon (18), sont préchargés à une position d'ouverture par l'intermédiaire d'un ressort d'ouverture (32), et dont l'un peut être assujetti à un manche par son bras de force fixe (12), les bras de force (12, 16) des deux leviers croisés étant reliés l'un à l'autre par l'entremise d'un système à moufle (46) dont les deux galets fixes (44) sont montés sur le bras de force fixe (12) relié au manche, et dont les deux galets fous (48) sont montés sur le bras de force mobile (16), le câble de traction (54) du système à moufle (46) venant en prise avec le bras de force fixe (12), et pouvant être guidé le long du manche, et le bras de charge du levier croisé assujettissable au manche étant réalisé sous la forme d'une lame de sectionnement (10),

caractérisé par la combinaison des particularités suivantes :

a) le bras de charge (14) du levier croisé mobile porte une enclume (20), sur laquelle la lame de sectionnement (10) se déplace avec effet de coupe par traction,

b) le bras de charge (14) du levier croisé mobile est articulé, par l'intermédiaire d'un tourillon (22), sur l'enclume (20) qui forme un levier (20, 28) amplificateur de force,

c) le bras de force (28) du levier amplificateur de force est guidé, par un trou oblong (26), le long d'un tourillon (24) d'articulation coulissante qui est engagé dans le bras de force (12) relié au manche,

d) le ressort d'ouverture (32) est ancré, d'une part, à une tôle de retenue (30) arrêtée sur l'enclume (20) au moyen du tourillon (22) et, d'autre part, au bras de force fixe (12) pouvant être relié au manche,

e) une douille (36), enfilée sur le bras de force fixe (12), porte l'embout d'emboîtement (34) d'un accouplement de fixation au manche, ainsi que deux bras fourchus (40) qui font saillie latéralement et portent entre eux un pivot (42) pour les galets fixes (44) du système à moufle, en succession coaxiale,

f) une douille (38), enfilée sur le bras de force mobile (16), se prolonge par deux bras fourchus (52) entre lesquels est implanté, de manière fixe, un pivot (50) qui porte en succession coaxiale les galets fous (48) du système à moufle.

Fig.1

# F i g.2